(19) **Europäisches Patentamt European Patent Office Office européen des brevets**

(11) **EP 3 953 634 B1**

(12) **EUROPEAN PATENT SPECIFICATION**

(45) Date of publication and mention of the grant of the patent:
**22.11.2023 Bulletin 2023/47**

(21) Application number: **20746364.7**

(22) Date of filing: **29.05.2020**

(51) International Patent Classification (IPC):
**F16L 53/38** *(2018.01)* **B05B 7/16** *(2006.01)*
**F24H 9/20** *(2022.01)*

(52) Cooperative Patent Classification (CPC):
**F16L 53/38; B05B 7/1693; F24H 1/102; F24H 9/2028**

(86) International application number:
**PCT/US2020/035136**

(87) International publication number:
**WO 2020/243439 (03.12.2020 Gazette 2020/49)**

(54) **SENSOR FREE HEATED HOSE**

SENSORFREIER BEHEIZTER SCHLAUCH

TUYAU CHAUFFÉ SANS CAPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 US 201962855501 P**

(43) Date of publication of application:
**16.02.2022 Bulletin 2022/07**

(73) Proprietor: **Graco Minnesota Inc.**
**Minneapolis, MN 55413-1829 (US)**

(72) Inventors:
• **PETERSON, Nicholas P.**
**Coon Rapids, Minnesota 55448 (US)**
• **BRUDEVOLD, Mark J.**
**Fridley, Minnesota 55432 (US)**
• **GODDING, Benjamin R.**
**St. Cloud, Minnesota 56301 (US)**
• **TIX, Joseph E.**
**Hastings, Minnesota 55033 (US)**
• **WEINBERGER, Mark T.**
**Mounds View, Minnesota 55112 (US)**

(74) Representative: **Staeger & Sperling**
**Partnerschaftsgesellschaft mbB**
**Sonnenstraße 19**
**80331 München (DE)**

(56) References cited:
**US-A1- 2012 008 927    US-A1- 2013 022 340**
**US-A1- 2014 361 099**

## Description

CROSS-REFERENCE TO RELATED APPLICATION(S)

This application claims the benefit of U.S. Provisional Application No. 62/855,501 filed May 31, 2019 for "SENSOR FREE HEATED HOSE" by N. Peterson, M. Brudevold, B. Godding, J. Tix, and M. Weinberger.

BACKGROUND

The present disclosure relates generally to heated fluid delivery systems and more particularly to heated hoses.

With fluid delivery system applications requiring delivery of a fluid through a hose exposed to ambient temperatures, ambient temperatures can adversely reduce a temperature of the fluid in the hose, rendering the fluid ineffective for the particular application. For instance, the application of spray foam insulation can involve pumping reactive fluids through one or more hoses exposed to varying ambient temperatures. In some low temperature environments, the physical properties of the fluids can be changed during the application process, causing the application to fail or resulting in the application of an ineffective product.

In existing heated fluid delivery systems, fluid temperature sensors are susceptible to physical damage during use and provide a potential failure point within the fluid dispensing system.

Fluid dispensing systems are for example known from US 2013/022340 A1, US 2012/008927 A1 and US 2014/361099 A1.

SUMMARY

The invention relates to a method of regulating a temperature of a fluid within a hose of a fluid dispensing system as defined by the features of claim 1. The method includes passing the fluid through the hose and across a heating element. A temperature of the fluid in the hose is sensed by the heating element. The sensed temperature of the fluid in the hose is compared to a reference temperature. An input of the heating element is adjusted in response to the comparison of the sensed temperature of the fluid in the hose to the reference temperature such that the temperature of the fluid is adjusted towards the reference temperature.

In addition, a heated hose assembly for managing a fluid as defined by claim 8 is claimed. The heated hose assembly includes a hose, a heating element mounted to the hose, and a control unit detachably affixed to and in fluid communication with the hose. The hose includes a protective cover, a core disposed radially inward from the protective cover, and a channel formed by an internal cavity of the hose. The channel extends through the hose and is configured to transport the fluid through the hose. The heating element extends along an entire length of the channel of the hose and is configured such that the resistance of the heating element changes in response to a change in a temperature of the heating element. The control unit is configured to supply a pressurized source of fluid into the channel of the hose, to supply current to the heating element, and to sense the resistance of the heating element.

The present summary is provided only by way of example, and not limitation. Other aspects of the present disclosure will be appreciated in view of the entirety of the present disclosure, including the entire text, claims, and accompanying figures.

BRIEF DESCRIPTION OF THE DRAWINGS

FIG. 1 is a perspective view of a system for dispensing a fluid with a hose.
FIG. 2 is a cross-section view of the hose taken at 2-2 shown in FIG. 1.
FIG. 3 is a flowchart of a method of regulating a temperature of a fluid within the hose.

While the above-identified figures set forth one or more embodiments of the present disclosure, other embodiments are also contemplated, as noted in the discussion. In all cases, this disclosure presents embodiments by way of representation and not limitation. It should be understood that numerous other modifications and embodiments can be devised by those skilled in the art, which fall within the scope and spirit of the principles of the disclosure. The figures may not be drawn to scale, and applications and embodiments of the present disclosure may include features and components not specifically shown in the drawings.

DETAILED DESCRIPTION

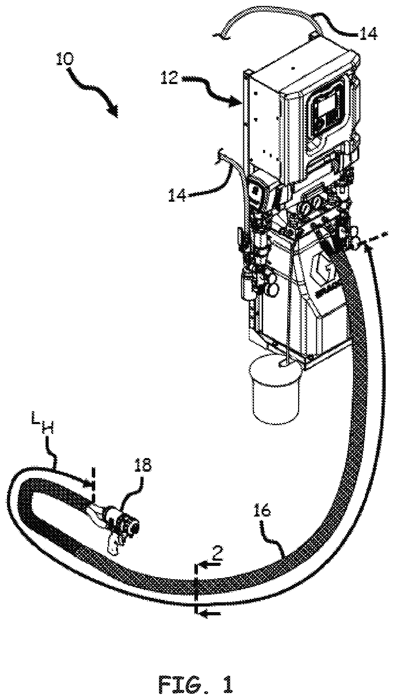

FIG. 1 is a perspective view of system 10 for dispensing a fluid and shows control unit 12, supply lines 14, hose 16 (with length $L_H$), and spray gun 18.

System 10 is a fluid management system. In this example, system 10 is a system for spraying polyurethane foam and polyurea coatings. Control unit 12 is a module for controlling a flow of fluid through system 10. In this example, control unit 12 is a plural component proportioner. In one non-limiting embodiment, control unit 12 can include a power supply, a temperature sensor, a resistance sensor, an amp meter, a fluid compressor, a motor, and/or fluid supply tanks. Supply lines 14 and hose 16 are fluid hoses in the form of elongated tubes. In this example, hose 16 is a heated hose. Length $L_H$ is a length of hose 16. Spray gun 18 is an attachment configured to control an output of fluid from hose 16.

Supply lines 14 are attached and fluidly connected to control unit 12. In one non-limiting embodiment, supply lines 14 can be connected to a feed pump of a fluid supply tank and/or a fluid refuse tank. Hose 16 is also attached and fluidly connected to control unit 12. Length $L_H$ spans the entire length of hose 16. Spray gun 18 is mounted to a terminal end of hose 16 on an opposite end of hose 16 from control unit 12. In this example, spray gun 18 can be removably fastened to hose 16 (e.g. by a threaded connection) to allow spray gun 18 to be interchanged with alternate spray nozzles to accommodate different spray specifications.

System 10 is used for the application of a spray foam insulation, which can involve pumping reactive fluids through one or more hoses. In one non-limiting embodiment, system 10 is configured to for managing and applying polyurethane foam and polyurea coatings. In this example, system 10 can be used to automatically apply heat to a fluid flowing through hose 16 to maintain a desired fluid temperature during operation. System 10 can be used to automatically maintain the desired fluid temperature without operator input or control. Although system 10 can be suited for use in spray foam applications, it will be understood by one of ordinary skill in the art that system 10 can be utilized for a wide variety of applications that require the application of heat to a flowing fluid.

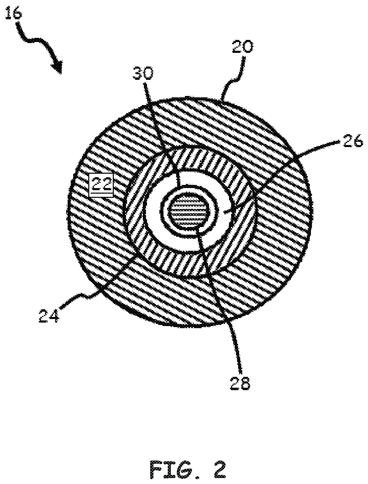

Control unit 12 controls a flow of fluid into and through supply lines 14 and hose 16. Supply lines 14 transports fluid to and from control unit 12 from fluid supply tanks (not shown in FIG. 1). Hose 16 delivers fluid from control unit 12 to spray gun 18. In this example and as will be discussed in further detail with respect to FIG. 2, hose 16 also regulates a temperature of the fluid flowing through hose 16 via a heating element. In some non-limiting embodiments, length $L_H$ of hose 16 can be up to 410 feet. Spray gun 18 controls an output of fluid from hose 16 via a variable sized nozzle orifice that can be controlled via an actuator (e.g., a handle) operated by a user.

FIG. 2 is a cross-section view of hose 16 taken at 2-2 shown in FIG. 1 and shows protective cover 20, insulation 22, core 24, channel 26, and heating element 28 (with cover 30).

Protective cover 20 is a protective sheath. Insulation 22 is an insulating layer disposed within protective cover 20, surrounding other elements of hose 16. Core 24 is an elongated tube and can include a flexible material. Channel 26 is an opening extending through length $L_H$ of hose 16. For example, channel 26 is formed by an internal cavity of hose 16, defined by core 24. During operation, channel 26 can be filled partially or completely with a fluid such as polyurethane foam or polyurea.

Heating element 28 is a wire that converts electric current into thermal energy and that converts thermal energy into electric current. For example, heating element 28 can be a coupling wire. In this example, heating element 28 is a metallic resistance heating element. In one non-limiting embodiment, a first material composition of heating element 28 can include 88% copper and 12% nickel. A temperature coefficient of resistance of this first material is 0.0004041 or 0.04041%. In this example, the temperature coefficient of resistance is a resistance-change factor per degree Celsius of temperature change. In another non-limiting embodiment, a second material composition of heating element 28 can include 70% nickel and 30% iron. A temperature coefficient of resistance of this second material composition is 0.00450 or 0.450%. In another non-limiting embodiment, the material composition of heating element 28 can include at least 50% copper, and more particularly can include more than 85% copper. Cover 30 is a sheath or covering.

Protective cover 20 is disposed around the exterior of hose 16. Insulation 22 is positioned radially in between and in contact with protective cover 20 and core 24. Core 24 is positioned radially in between and in contact with insulation 22 and channel 26. Channel 26 is disposed radially inward and extends through core 24. Channel 26 is also fluidly connected to control unit 12 and to spray gun 18 (as shown in FIG. 1).

In this example, heating element 28 is disposed inside of channel 26 and is in direct contact with the fluid occupying channel 26. Heating element 28 is electrically connected to and in data communication with control unit 12. Heating element 28 is connected to a fitting disposed on both ends of hose 16. As illustrated in FIG. 2, heating element 28 can be positioned at an axial centerpoint of hose 16. In another non-limiting embodiment, heating element 28 can occupy a position at a gravitational bottom of channel 26 (at the bottom of channel 26 as shown in FIG. 2), or a position therebetween. Cover 30 is disposed around an exterior of heating element 28. In one non-limiting embodiment, cover 30 can include a first high temperature insulation layer, a high tensile strength mesh, and/or a second layer of insulation.

Protective cover 20 protects hose 16 from damage caused by foreign objects coming into contact with hose 16. Protective cover 20 also prevents hose 16 from twisting or kinking. Insulation 22 acts as an insulating layer to minimize the transfer of thermal energy from the fluid in channel 26 to an ambient environment around hose 16. Core 24 contains the fluid within channel 26. Channel 26 provides an opening through which the fluid flows through hose 16. In this example, heating element 28 transfers thermal energy to the fluid in channel 26 and also measures a temperature of the fluid within hose 16.

For example, the temperature dependence of electrical resistance of heating element 28 can be used to sense or measure a temperature of the fluid in hose 16 by measuring a temperature of heating element 28. The temperature of heating element 28 is determined by measuring a resistance of heating element 28 at a specific temperature. The resistance of heating element 28 is measured by applying a known current through heating element 28, measuring a voltage drop across heating element 28, and calculating a resistance of heating element 28 according to Ohm's law (i.e., resistance = voltage/current).

After determining the resistance of heating element 28 at a particular operating temperature, the approximation for temperature dependence of electrical resistance of a conductor (i.e., Equation 1.1 below) can be used to solve for the operating temperature of heating element 28:

$$R_T = R_r + R_r \alpha T - R_r \alpha T_r$$
Equation 1.1

Where,

T = current/operating temperature of the conductor
$T_r$ = reference temperature (in this non-limiting example, $T_r$ equals approximately 120°F or 48.9°C)
$R_T$ = Resistance of the conductor at temperature T
$R_r$ = Resistance of the conductor at reference temperature $T_r$
$\alpha$ = Temperature coefficient of resistance at reference temperature $T_r$

Solving Equation 1.1 for the current/operating temperature of heating element 28 (e.g., the conductor), produces the following approximation - Equation 1.2:

$$T = \beta \frac{\left(\frac{V_T/I_T}{R_r} - 1\right)}{\alpha} + T_r$$
Equation 1.2

Where:

T = current/operating temperature of the fluid in hose 16
$\beta$ = conversion factor that takes into account a cycle compensation and a flow rate compensation of system 10
$V_T$ = Voltage drop across heating element 28 at temperature T
$I_T$ = Current across heating element 28 at temperature T
$T_r$ = reference temperature
$R_r$ = Resistance of heating element 28 at reference temperature $T_r$
$\alpha$ = Temperature coefficient of resistance at reference temperature $T_r$

Because heating element 28 extends an entire of length $L_H$ of hose 16, heating element 28 measures an average temperature of the fluid in hose 16 across all of length $L_H$ of hose 16. Cover 30 protects heating element 28 and provides the function of a coupling element and is configured to effectuate direct coupling between heating element 28 and the fluid in channel 26. For example, as a coupling element effectuating direct coupling, cover 30 transfers electric current via physical contact between heating element 28 and the fluid in channel 26.

Existing fluid management systems often incorporate fluid temperature sensors that are susceptible to physical damage during use as well as provide a potential failure point with the fluid dispensing system. System 10 with heating element 28 being used to measure the fluid temperature within hose 16 allows for fluid temperature control of the fluid without the need for a second sensor (e.g., fluid temperature sensor) in the fluid stream. This will prevent physical damage to hose 16 and reduce the number of potential failure points within system 10.

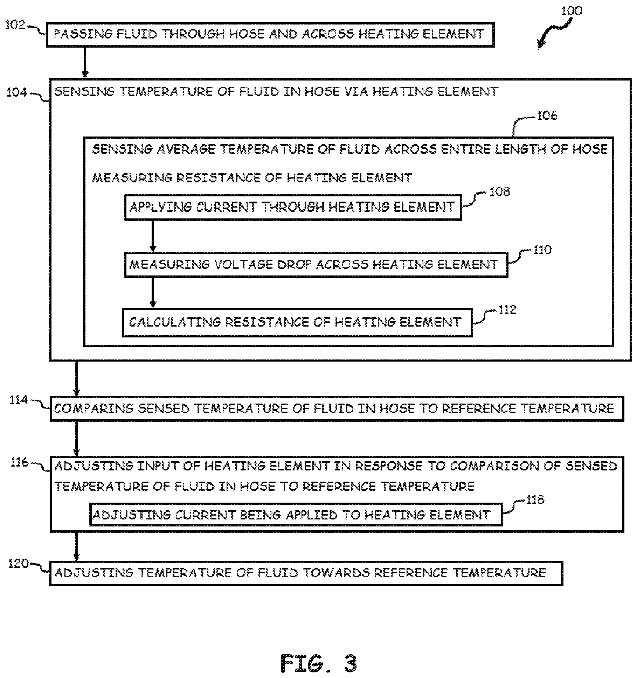

FIG. 3 shows a flowchart of method 100 that is a method of regulating a temperature of the fluid within hose 16 and includes steps 102-120.

Step 102 includes passing the fluid through hose 16 and across heating element 28. Step 104 includes sensing a temperature of the fluid in hose 16 via heating element 28 and step 106. Step 106 includes sensing an average temperature of the fluid across an entire length (i.e., length $L_H$) of hose 16 by measuring the resistance of heating element 28 and steps 108-112. Step 108 includes applying a current through heating element 28. Step 110 includes measuring, with control unit 12, a voltage drop across heating element 28. Step 112 includes calculating a resistance of heating element 28 by using Equation 1.1 provided above. In another example, the resistance of heating element 28 can be calculated using Equation 1.2 above. In one non-limiting embodiment, step 104 can also include using Equation 1.3 above to calculate the temperature of the fluid in hose 16.

Step 114 includes comparing the sensed temperature of the fluid in hose 16 to a reference temperature. In this example, the reference temperature can be 120°F (or 48.9°C), which can be representative of a critical temperature of the fluid. Step 116 includes adjusting an input of heating element 28 in response to the comparison of the sensed temperature of the fluid in hose 16 to the reference temperature and step 118. For example, step 116 can include adjusting (e.g., either increasing or decreasing) a voltage across heating element 28 in response to the comparison of the sensed temperature of the fluid in hose 16 to the reference temperature. For example, step 116 can include adjusting (e.g., either increasing or decreasing) a current sent through heating element 28 in response to the comparison of the sensed temperature of the fluid in hose 16 to the reference temperature. Step 118 includes adjusting the temperature of the fluid towards the reference temperature. In this example, the temperature of the fluid can be adjusted via transfer of thermal energy via conduction (e.g., physical contact) between heating element 28 and the fluid in channel 26.

In this example, method 100 can be used as a primary temperature sensing mode of system 10. In another non-limiting embodiment, method 100 can be used as a secondary mode, a tertiary mode, a back-up mode, or some other non-primary temperature sensing mode of operation of system 10.

While the disclosure has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the disclosure without departing from the scope the invention. Therefore, it is intended that the disclosure not be limited to the particular embodiment(s) disclosed, but that the disclosure will include all embodiments falling within the scope of the claims.

## Claims

1. A method of regulating a temperature of a fluid within a hose (16) of a fluid dispensing system (10), the method comprising:
   passing the fluid through the hose (16), wherein the fluid dispensing system (10) comprises:

      a control unit (12);
      a hose (16) attached to and fluidly connected with the control unit (12), the hose (16) having a length ($L_H$) and a channel (26) extending therethrough; and
      a heating element (28) mounted to and extending within the entire length ($L_H$) of the channel (26);
      sensing, with the heating element (28), a temperature of the fluid in the hose (16), the sensed temperature being an average temperature of the fluid along the entire length ($L_H$) of the hose (16);
      comparing, with the control unit (12), the sensed temperature of the fluid in the hose (16) to a reference temperature of the fluid;
      adjusting, with the control unit (12), an input of the heating element (28) in response to the comparison of the sensed temperature of the fluid in the hose (16) to the reference temperature such that the temperature of the fluid is adjusted towards the reference temperature.

2. The method of claim 1, wherein the heating element (28) is a wire and is configured such that a resistance of the heating element (28) changes in response to a change in a temperature of the heating element (28).

3. The method of claim 1, wherein sensing the temperature of the fluid in the hose (16) with the heating element (28) comprises measuring a resistance of the heating element (28).

4. The method of claim 3, wherein measuring the resistance of the heating element (28) comprises:

      applying a current through the heating element (28);
      measuring a voltage drop across the heating element (28); and
      calculating the resistance of the heating element (28) from the measured voltage drop and applied current, according to Ohm's law.

5. The method of claim 1, wherein adjusting the input of the heating element (28) comprises adjusting the current being applied to the heating element (28).

6. The method of claim 1, wherein the heating element (28) is disposed within the channel (26) of the hose (16), wherein the heating element (28) is in direct contact with the fluid, and wherein sensing the temperature of the fluid in the hose (16) further comprises directly sensing the temperature of the fluid with the heating element (28).

7. The method of claim 1, wherein the heating element (28) is wrapped around a core of the hose (16), wherein sensing the temperature of the fluid in the hose (16) further comprises indirectly sensing the temperature of the fluid through the core of the hose (16) with the heating element (28).

8. A heated hose assembly for managing a fluid, the heated hose assembly comprising:

      a hose (16) comprising:

         a protective cover (20);
         an insulating layer (22) disposed radially inward from the protective cover (20);
         a core (24) disposed radially inward from the insulating layer (22); and
         a channel (26) formed by an internal cavity of the hose (16), the channel (26) extending through the hose (16), wherein the channel (26) is configured to transport the fluid through the hose (16);

      a heating element (28) disposed within the channel (26), wherein the heating element (28) extends along an entire length ($L_H$) of the hose (16), wherein the heating element (28) is configured such that the resistance of the heating element (28) changes in response to a change in a temperature of the heating element (28);
      fittings respectively disposed on both ends of the hose (16), the heating element (28) connected to the fittings; and
      a control unit (12) detachably affixed to and in fluid communication with the hose (16), wherein the control unit (12) is configured to supply a pressurized source of fluid into the channel (26) of the hose (16), wherein the control unit (12) is configured to supply current to the heating element (28), and wherein the control unit (12) is configured to sense the resistance of the heating element (28).

9. The heated hose assembly of claim 8, wherein the control unit (12) is configured to sense a change in the resistance of the heating element (28).

10. The heated hose assembly of claim 9, wherein the heating element (28) is configured such that the temperature of the heating element (28) changes in response to a change in current across the heating element (28).

11. The heated hose assembly of claim 9, wherein the heating element (28) comprises a cover (30) that is configured to transfer thermal energy from the heating element (28) to the fluid in the channel (26) of the hose (16).


**Patentansprüche**

1. Verfahren zum Regulieren einer Temperatur eines Fluids in einem Schlauch (16) eines Fluidabgabesystems (10), wobei das Verfahren umfasst:
Fließenlassen des Fluids durch den Schlauch (16), wobei das Fluidabgabesystem (10) umfasst:

eine Steuereinheit (12);
einen Schlauch (16), der an der Steuereinheit (12) angebracht und damit fluidisch verbunden ist, wobei der Schlauch (16) eine Länge ($L_H$) und einen sich durch diesen erstreckenden Kanal (26) aufweist; und
ein Heizelement (28), das an dem Kanal (26) montiert ist und sich innerhalb der gesamten Länge ($L_H$) desselben erstreckt;
Abtasten, mit dem Heizelement (28), einer Temperatur des Fluids in dem Schlauch (16), wobei die abgetastete Temperatur eine durchschnittliche Temperatur des Fluids entlang der gesamten Länge ($L_H$) des Schlauchs (16) ist;
Vergleichen, mit der Steuereinheit (12), der abgetasteten Temperatur des Fluids in dem Schlauch (16) mit einer Referenztemperatur des Fluids;
Anpassen, mit der Steuereinheit (12), einer Eingabe des Heizelements (28) als Reaktion auf den Vergleich der abgetasteten Temperatur des Fluids in dem Schlauch (16) mit der Referenztemperatur, so dass die Temperatur des Fluids in Richtung auf die Referenztemperatur angepasst wird.

2. Verfahren nach Anspruch 1, wobei das Heizelement (28) ein Draht ist und derart konfiguriert ist, dass sich ein Widerstand des Heizelements (28) als Reaktion auf eine Änderung einer Temperatur des Heizelements (28) ändert.

3. Verfahren nach Anspruch 1, wobei das Abtasten der Temperatur des Fluids in dem Schlauch (16) mit dem Heizelement (28) das Messen eines Widerstands des Heizelements (28) umfasst.

4. Verfahren nach Anspruch 3, wobei das Messen des Widerstands des Heizelements (28) umfasst:

Anlegen eines Stroms durch das Heizelement (28) hindurch;
Messen eines Spannungsabfalls über das Heizelement (28); und
Berechnen des Widerstands des Heizelements (28) aus dem gemessenen Spannungsabfall und dem angelegten Strom, gemäß dem ohmschen Gesetz.

5. Verfahren nach Anspruch 1, wobei das Anpassen der Eingabe des Heizelements (28) das Anpassen des Stroms umfasst, der an das Heizelement (28) angelegt wird.

6. Verfahren nach Anspruch 1, wobei das Heizelement (28) innerhalb des Kanals (26) des Schlauchs (16) angeordnet wird, wobei das Heizelement (28) in direktem Kontakt mit dem Fluid steht, und wobei das Abtasten der Temperatur des Fluids in dem Schlauch (16) ferner das direkte Abtasten der Temperatur des Fluids mit dem Heizelement (28) umfasst.

7. Verfahren nach Anspruch 1, wobei das Heizelement (28) um eine Seele des Schlauchs (16) gewickelt ist, wobei das Abtasten der Temperatur des Fluids in dem Schlauch (16) ferner das indirekte Abtasten der Temperatur des Fluids durch die Seele des Schlauchs (16) hindurch mit dem Heizelement (28) umfasst.

8. Beheizte Schlauchleitung zum Handhaben eines Fluids, wobei die beheizte Schlauchleitung umfasst:

einen Schlauch (16), umfassend:

eine Schutzabdeckung (20);
eine Isolierschicht (22), die von der Schutzabdeckung (20) aus radial nach innen angeordnet ist;
eine Seele (24), die von der Isolierschicht (22) aus radial nach innen angeordnet ist; und
einen Kanal (26), der durch einen internen Hohlraum des Schlauchs (16) gebildet wird, wobei sich der Kanal (26) durch den Schlauch (16) hindurch erstreckt, wobei der Kanal (26) dazu konfiguriert ist, das Fluid durch den Schlauch (16) hindurch zu transportieren;

ein Heizelement (28), das innerhalb des Kanals (26) angeordnet ist, wobei sich das Heizelement (28) entlang einer gesamten Länge ($L_H$) des Schlauchs (16) erstreckt, wobei das Heizelement (28) derart konfiguriert ist, dass sich der Widerstand des Heizelements (28) als Reaktion auf eine Änderung einer Temperatur des Heizelements (28) ändert; Armaturen, die jeweils an beiden Enden des Schlauchs (16) angeordnet sind, wobei das Heizelement (28) an die Armaturen angeschlossen ist; und eine Steuereinheit (12), die abnehmbar an dem Schlauch (16) befestigt ist und damit in Fluidverbindung steht, wobei die Steuereinheit (12) dazu konfiguriert ist, eine unter Druck stehende Fluidquelle in den Kanal (26) des Schlauchs (16) einzuspeisen, wobei die Steuereinheit (12) dazu konfiguriert ist, das Heizelement (28) mit Strom zu versorgen, und wobei die Steuereinheit (12) dazu konfiguriert ist, den Widerstand des Heizelements (28) abzutasten.

9. Beheizte Schlauchleitung nach Anspruch 8, wobei die Steuereinheit (12) dazu konfiguriert ist, eine Änderung des Widerstands des Heizelements (28) abzutasten.

10. Beheizte Schlauchleitung nach Anspruch 9, wobei das Heizelement (28) derart konfiguriert ist, dass sich die Temperatur des Heizelements (28) als Reaktion auf eine Änderung des Stroms über das Heizelement (28) ändert.

11. Beheizte Schlauchleitung nach Anspruch 9, wobei das Heizelement (28) eine Abdeckung (30) umfasst, die dazu konfiguriert ist, thermische Energie von dem Heizelement (28) auf das Fluid in dem Kanal (26) des Schlauchs (16) zu übertragen.

**Revendications**

1. Procédé de régulation de la température d'un fluide à l'intérieur d'un tuyau (16) d'un système de distribution de fluide (10), le procédé comprenant : le passage du fluide à travers le tuyau (16), dans lequel le système de distribution de fluide (10) comprend :

    une unité de commande (12) ;

un tuyau (16) fixé à l'unité de commande (12) et en communication fluidique avec celle-ci, le tuyau (16) ayant une longueur ($L_H$) et un canal (26) s'étendant à travers celui-ci ; et un élément chauffant (28) monté sur et s'étendant dans toute la longueur ($L_H$) du canal (26) ; la détection, avec l'élément chauffant (28), d'une température du fluide dans le tuyau (16), la température détectée étant une température moyenne du fluide sur toute la longueur ($L_H$) du tuyau (16) ; la comparaison, avec l'unité de commande (12), de la température détectée du fluide dans le tuyau (16) à une température de référence du fluide ; l'ajustement, avec l'unité de commande (12), d'une entrée de l'élément chauffant (28) en réponse à la comparaison de la température détectée du fluide dans le tuyau (16) à la température de référence de telle sorte que la température du fluide soit ajustée vers la température de référence.

2. Procédé selon la revendication 1, dans lequel l'élément chauffant (28) est un fil et est configuré de telle sorte qu'une résistance de l'élément chauffant (28) change en réponse à un changement de température de l'élément chauffant (28).

3. Procédé selon la revendication 1, dans lequel la détection de la température du fluide dans le tuyau (16) avec l'élément chauffant (28) comprend la mesure d'une résistance de l'élément chauffant (28).

4. Procédé selon la revendication 3, dans lequel la mesure de la résistance de l'élément chauffant (28) comprend :

    l'application d'un courant à travers l'élément chauffant (28) ; la mesure d'une chute de tension à travers l'élément chauffant (28) ; et le calcul de la résistance de l'élément chauffant (28) à partir de la chute de tension mesurée et du courant appliqué, selon la loi d'Ohm.

5. Procédé selon la revendication 1, dans lequel l'ajustement de l'entrée de l'élément chauffant (28) comprend l'ajustement du courant appliqué à l'élément chauffant (28).

6. Procédé selon la revendication 1, dans lequel l'élément chauffant (28) est disposé à l'intérieur du canal (26) du tuyau (16), dans lequel l'élément chauffant (28) est en contact direct avec le fluide, et dans lequel la détection de la température du fluide dans le tuyau (16) comprend en outre la détection directe de la température du fluide avec l'élément chauffant (28).

**7.** Procédé selon la revendication 1, dans lequel l'élément chauffant (28) est enroulé autour d'un noyau du tuyau (16), dans lequel la détection de la température du fluide dans le tuyau (16) comprend en outre la détection indirecte de la température du fluide à travers le noyau du tuyau (16) avec l'élément chauffant (28).

**8.** Ensemble tuyau chauffé pour gérer un fluide, l'ensemble tuyau chauffé comprenant :

un tuyau (16) comprenant :

un couvercle de protection (20) ;
une couche isolante (22) disposée radialement vers l'intérieur depuis le couvercle de protection (20) ;
un noyau (24) disposé radialement vers l'intérieur depuis la couche isolante (22) ; et
un canal (26) formé par une cavité interne du tuyau (16), le canal (26) s'étendant à travers le tuyau (16), dans lequel le canal (26) est configuré pour transporter le fluide à travers le tuyau (16) ;

un élément chauffant (28) disposé à l'intérieur du canal (26), dans lequel l'élément chauffant (28) s'étend sur toute la longueur ($L_H$) du tuyau (16), dans lequel l'élément chauffant (28) est configuré de telle sorte que la résistance de l'élément chauffant (28) change en réponse à un changement de température de l'élément chauffant (28) ;
des raccords disposés respectivement sur les deux extrémités du tuyau (16), l'élément chauffant (28) étant connecté aux raccords ; et
une unité de commande (12) fixée de manière amovible au tuyau (16) et en communication fluidique avec celui-ci, dans lequel l'unité de commande (12) est configurée pour fournir une source de fluide sous pression dans le canal (26) du tuyau (16), dans lequel l'unité de commande (12) est configurée pour fournir du courant à l'élément chauffant (28), et dans lequel l'unité de commande (12) est configurée pour détecter la résistance de l'élément chauffant (28).

**9.** Ensemble tuyau chauffé selon la revendication 8, dans lequel l'unité de commande (12) est configurée pour détecter un changement de résistance de l'élément chauffant (28).

**10.** Ensemble tuyau chauffé selon la revendication 9, dans lequel l'élément chauffant (28) est configuré de telle sorte que la température de l'élément chauffant (28) change en réponse à un changement de courant à travers l'élément chauffant (28).

**11.** Ensemble tuyau chauffé selon la revendication 9, dans lequel l'élément chauffant (28) comprend un couvercle (30) qui est configuré pour transférer l'énergie thermique de l'élément chauffant (28) au fluide dans le canal (26) du tuyau (16).

FIG. 1

FIG. 2

102 — PASSING FLUID THROUGH HOSE AND ACROSS HEATING ELEMENT

100

104 — SENSING TEMPERATURE OF FLUID IN HOSE VIA HEATING ELEMENT

106

SENSING AVERAGE TEMPERATURE OF FLUID ACROSS ENTIRE LENGTH OF HOSE

MEASURING RESISTANCE OF HEATING ELEMENT

108

APPLYING CURRENT THROUGH HEATING ELEMENT

110

MEASURING VOLTAGE DROP ACROSS HEATING ELEMENT

112

CALCULATING RESISTANCE OF HEATING ELEMENT

114 — COMPARING SENSED TEMPERATURE OF FLUID IN HOSE TO REFERENCE TEMPERATURE

116 — ADJUSTING INPUT OF HEATING ELEMENT IN RESPONSE TO COMPARISON OF SENSED TEMPERATURE OF FLUID IN HOSE TO REFERENCE TEMPERATURE

118

ADJUSTING CURRENT BEING APPLIED TO HEATING ELEMENT

120 — ADJUSTING TEMPERATURE OF FLUID TOWARDS REFERENCE TEMPERATURE

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62855501, N. Peterson, M. Brudevold, B. Godding, J. Tix, and M. Weinberger
- US 2013022340 A1
- US 2012008927 A1
- US 2014361099 A1